# EUROPÄISCHE PATENTSCHRIFT

(11) **EP 2 781 150 B1**
(45) Veröffentlichungstag und Bekanntmachung des Hinweises auf die Patenterteilung: **26.04.2017**
(21) Anmeldenummer: 14155446.9
(22) Anmeldetag: 17.02.2014
(51) Int. Cl.: A01G 1/08

(54) **Rasensperre mit Kunstrasenkante**
Turf barrier with artificial turf edge
Barrière pour gazon avec bordure de gazon artificiel

(30) Priorität: 20.03.2013 DE 202013002685 U
(43) Veröffentlichungstag der Anmeldung: 24.09.2014
(73) Patentinhaber: Güntner, Heribert, 82281 Egenhofen (DE); Huber, Anton, 82256 Fürstenfeldbruck (DE)
(72) Erfinder: Güntner, Heribert, 82281 Egenhofen (DE); Huber, Anton, 82256 Fürstenfeldbruck (DE)
(74) Vertreter: Grünecker Patent- und Rechtsanwälte PartG mbB

(56) Entgegenhaltungen:
- DE-U1- 8 816 399
- DE-U1- 20 112 623
- GB-A- 2 108 183
- US-A- 3 916 563
- US-A- 5 544 445

## Beschreibung

Die Erfindung bezieht sich auf eine Kunstrasensperre gemäß dem Oberbegriff des Anspruchs 1. Sie bezieht sich außerdem auf ein Verfahren zur Herstellung einer solchen Kunstrasensperre gemäß dem Oberbegriff des Anspruchs 14.

Kunstrasensperren sind beispielsweise aus der DE 88 16 399 U1 bekannt. Dort wird ein Element zur Begrenzung von Rasenflächen offenbart. Dieses weist einen hohen keilförmigen Abschnitt auf, der zum Eintreiben in das Erdreich vorgesehen ist. An der breiten Seite dieses keilförmigen Abschnitts ist eine Platte vorgesehen, auf der ein Kunstrasenbesatz aufgebracht ist. Das offenbarte Element weist den Nachteil auf, dass die besagte Platte eine Höhe von mehreren Zentimetern aufweisen und auf dem Erdboden aufliegen soll. Bei Rasenflächen, auf denen die Rasenhöhe niedriger ist, beispielsweise auf Golf-plätzen, wo die Rasenhöhe zum Teil nur wenige Millimeter beträgt, ist das in der DE 88 16 399 U1 offenbarte Begrenzungselement ungeeignet, da es beim Mähen der Rasenfläche hinderlich ist und zudem eine Stolperfalle darstellt.

In der US 3,916,563 A ist eine Rasenkante offenbart, die im Wesentlichen aus einer Platte und einem Gitter besteht. Dabei ist vorgesehen, die Platte vertikal vollständig im Erdreich zu versenken. Das Gitter ist derart an der Platte befestigt, dass es sich in horizontaler Richtung von der Platte in Richtung der Rasenfläche erstreckt, bündig mit der Oberkante der Platte abschließt und daher ebenfalls vollständig im Erdreich versenkt wird. Das Gitter ist folglich dafür vorgesehen, mit einem Rasenmäher überfahren zu werden. Nachteilig an dieser Lösung ist, dass die verhältnismäßig schmale Platte, die zudem auch noch vollständig im Erdreich versenkt wird, von Grashalmen leicht überwachsen werden kann. Dadurch kann die ungewollte Ausbreitung von Gräsern über die Platte hinaus, beispielsweise durch Kindel oder abgeworfene Samen, nicht wirkungsvoll verhindert werden.

Die US 5,544,445 A offenbart eine Landschaftskantenvorrichtung. Diese ist ähnlich wie das Begrenzungselement aus der DE 88 16 399 U1 nicht zur vollständigen Versenkung im Erdboden vorgesehen. Hier soll die Stolpergefahr dadurch verringert werden, dass ein Teil der über die Oberfläche hinausragenden Strukturen flexibel gestaltet wird, sodass diese flexiblen Strukturen bei einem Auftreten oder aber Überrollen, beispielsweise durch einen Rasenmäher, nach unten gedrückt werden. Diese Vorrichtung weist jedoch die gleichen Nachteile wie das in der DE 88 16 399 U1 offenbarte Element auf, wenn auch unter Umständen in geringerem Maße.

Neben den vorstehend beschriebenen Nachteilen existieren bei bestimmten Rasenbegrenzungen weitere Problemstellungen, die in den oben genannten Dokumenten gar nicht erst angesprochen werden. Bei Bewässerungsanlagen wird Wasser auf einem bestimmten Gebiet verteilt. Dabei fährt eine Düse nach oben und besprüht einen Bereich mit Wasser. Wenn jedoch die Düse eingewachsen ist, hindern Gras und anderes Unkraut die Anlage daran, das Wasser gleichmäßig zu verteilen. Dadurch werden bestimmte Stellen nicht mehr mit Wasser versorgt und andere Stellen überflutet.

Eingewachsene Düsen bergen auch große Unfallgefahren. Wenn diese von Personen nicht erkannt werden, besteht die Möglichkeit des Umknickens, wodurch es zu einer Knöchelverletzung kommen kann. Momentan wird das Problem des Einwachsens der Bewässerungsanlagen auf Golfplätzen mit Hilfe von zusätzlichem Personal gelöst. Bei Wegen, Beeten und Flächen, die an Wiesen angrenzen, wächst der Rasen in die gepflasterte oder ungewollte Zone ein. Um ein Beet gepflegt zu halten, ist es nötig, es alle 2-3 Wochen von Unkraut und Rasen zu befreien.

Aufgabe der Erfindung ist es daher, eine Kunstrasensperre zu schaffen, die durch das Vorsehen von konstruktiv möglichst einfachen Maßnahmen dazu geeignet ist, bei der Abgrenzung von besonders niedrig gemähten Rasenflächen eingesetzt zu werden, dabei das Mähen dieser Rasenflächen zu erleichtern und ein Überwachsen möglichst effektiv zu verhindern, ohne bei alledem die Stolpergefahr zu erhöhen.

Diese Aufgabe wird erfindungsgemäß gelöst durch eine Kunstrasensperre mit den Merkmalen des Anspruchs 1 sowie durch eine durch ein Verfahren gemäß dem unabhängigen Anspruch 14 hergestellte Kunstrasensperre.

Die erfindungsgemäße Kunstrasensperre umfasst eine Rasensperre, Kunstrasen und eine Anschlussfläche für den Kunstrasen. Sie zeichnet sich dadurch aus, dass zusätzlich ein Anschlussgitter vorgesehen ist. Beispielsweise ist es möglich, dass die Kunstrasensperre dadurch gekennzeichnet ist, dass sie aus Kunstrasen, Rasensperre, Anschlussgitter und Anschlussfläche für den Kunstrasen besteht. Rasensperre und Wachstumssperre werden im Folgenden synonym verwendet. Bei der erfindungsgemäßen Kunstrasensperre stellt der vorgesehene Kunstrasen vorteilhafterweise eine Barriere gegen das Überwachsen dar, die auch bei vollständigem Versenken der Kunstrasensperre bis auf das Niveau des Erdreichs wirksam ist. Durch den dichten Kunstrasen können Grashalme aus der angrenzenden Naturrasenfläche nicht hindurchwachsen.

Der Kunstrasen ist mittels Hinterspritzen mit der Anschlussfläche verbunden. Dies ermöglicht eine einfache und schnelle Herstellung bei gleichzeitiger Gewährleistung einer robusten und langlebigen Verbindung.

Durch die Flexibilität der Kunstrasenhalme und die Tatsache, dass diese nicht wachsen, stellt die durch den Kunstrasen gebildete Barriere jedoch weder ein Hindernis für das Übermähen noch eine Stolpergefahr dar.

Es ist vorteilhaft, wenn die Kunstrasensperre eine runde Rasensperre enthält, die vorzugsweise etwa 5 bis 10 cm, zum Beispiel etwa 8 cm tief in das Erdreich ragt und somit auch zur Stabilisierung dient. Dabei kann die Kunstrasensperre zum Beispiel dadurch gekennzeichnet sein, dass sie aus einer runden Wachstumssperre besteht, die etwa 5 bis 10 cm, zum Beispiel etwa 8 cm tief in das Erdreich ragen und somit auch zur Stabilisierung dienen kann. Bei normalen Rasenflächen kann durch diese Eindringtiefe ein Einwachsen der Wurzeln der Naturrasenfläche in den durch die Kunstrasensperre abgetrennten Bereich verhindert werden.

Besonders günstig ist es, wenn die Kunstrasensperre in der Mitte der Rasensperre eine runde oder zirkuläre Aussparung aufweist, damit eine Düse einer Bewässerungsanlage ungehindert Wasser verteilen kann. Die zirkuläre Aussparung kann beispielsweise einen Durchmesser von 8 bis 15 cm, zum Beispiel von 12 cm haben. Mit der erfindungsgemäßen Kunstrasensperre wird unter anderem verhindert, dass Pflanzen zu nah an Bewässerungsdüsen heranwachsen. Sie sorgt außerdem für ein gepflegtes Erscheinungsbild, das stets gewährleistet ist. Darüber hinaus bietet sie folgende Vorteile:
- Die Bewässerung wird genauer und sicherer.
- Es kann Personal für das Ausschneiden, Reinigen und Instandhaltung eingespart werden.
- Eventuelle Fehler des Personals bei der Reinigung der Bewässerungsanlagen werden vermieden.
- Drastische Zeiteinsparung bei der Gartenpflege.
- Unfallvermeidung.

In einer weiteren vorteilhaften Variante ist die Kunstrasensperre in der Mitte der Rasensperre verschlossen. So kann sie zum Beispiel zur Abdeckung von im Boden integrierten Strukturen, wie z. B. Schaltkästen oder Befestigungseinrichtungen für Pfosten oder Ähnlichem, dienen. Eine solche Kunstrasensperre kann einstückig ausgeführt und/oder permanent verschlossen sein. Denkbar ist jedoch auch, dass herausnehmbare oder zu öffnende Vorrichtungen, wie zum Beispiel Deckel oder Klappen, vorgesehen sind.

Es ist zweckmäßig, wenn zwischen einer Kante des Anschlussgitters und der Aussparung die Anschlussfläche vorgesehen ist. Auf diese Weise kann der auf die Anschlussfläche aufgebrachte Kunstrasen seine Barrierewirkung am besten entfalten. Dabei ist es beispielsweise möglich, dass die Kante vom Anschlussgitter eine Fläche bis zur Aussparung von ca. 12 cm Durchmesser eine Klebefläche aufweist.

In einer vorteilhaften Variante kann die Anschlussfläche der Kunstrasensperre beispielsweise einen Außendurchmesser zwischen 25 und 30 cm aufweisen. Dabei ist es beispielsweise möglich, dass die Klebefläche, bevorzugt mit 25 bis 30 cm Durchmesser, an dem Anschlussgitter 2 bis 3 cm unterhalb der Kunstrasenklebefläche angebracht werden kann.

Es ist vorteilhaft, wenn das Anschlussgitter 2 bis 3 cm unterhalb der Anschlussfläche angebracht ist. Diese Konfiguration bietet Vorteile, wenn das Gitter tiefer im Erdreich versenkt werden soll. Bei der Neuverlegung von Rasenflächen können solche Kunstrasensperren vor dem Verlegen platziert werden. Danach kann beispielsweise Rollrasen über das Anschlussgitter verlegt werden. Dies erzeugt eine besonders stabile Integration der Kunstrasensperre in die Rasenfläche.

Es ist zweckmäßig, wenn das Anschlussgitter seitlich etwa 4 bis 5 cm von dem anzubringenden Kunstrasen herausragt. Dadurch weist es eine ausreichende Fläche zum Verwachsen mit dem Naturrasen auf.

Es ist denkbar, dass sich der angebrachte Kunstrasen an der Anschlussfläche zwischen der Aussparung und dem Anschlussgitter befindet.

In einer vorteilhaften Variante enthält die Kunstrasensperre eine gerade Rasensperre, die vorzugsweise etwa 5 bis 10 cm, zum Beispiel etwa 8 cm in das Erdreich ragt. Solche geraden Kunstrasensperren werden im Folgenden mitunter auch Kunstrasenkante genannt. Grundsätzlich können die Ausdrücke Kunstrasenkante und Kunstrasensperre jedoch synonym verwendet werden. Es ist beispielsweise möglich, dass eine Kunstrasenkante dadurch gekennzeichnet ist, dass sie aus Kunstrasen, Rasensperre, Anschlussgitter und Anschlussfläche für den Kunstrasen besteht. Gerade Kunstrasensperren sind vorteilhaft für die Einfassung von geraden Abschnitten, beispielsweise von Wegen oder aber Beeten.

Vorstellbar sind auch angewinkelte Kunstrasenkanten, Eckstücke und Kunstrasenkanten, die einen Radius aufweisen, sodass auch geschwungene Kanten eines Beetes eingefasst werden können.

Es ist vorstellbar, dass die Kunstrasenkante vorzugsweise eine Gesamtlänge von 34 cm hat. Mit einzelnen Kunstrasensperren von dieser Länge lassen sich Konturen von Rasenkanten flexibel definieren.

Es kann vorteilhaft sein, wenn die Kunstrasensperre an einem Ende mit einem konkaven Radius und am anderen Ende mit einem konvexen Radius versehen ist. Insbesondere gerade Kunstrasensperren können dadurch flexibel verlegt werden, unter anderem auch in einem Winkel zueinander, ohne dass ungleichmäßige Fugen entstehen.

Es ist vorteilhaft, wenn an einem Ende der Kunstrasensperre ein Haken angebracht ist, damit sich einzelne Elemente fugenlos miteinander verbinden lassen. Unter einzelnen Elementen sind hier benachbarte Kunstrasensperren zu verstehen.

Es ist von Vorteil, wenn die Rasensperre sich über das gesamte Bauteil zieht. Dadurch wird auf der gesamten Länge der Kunstrasenkante ein Einwachsen des Naturrasens und anderer unerwünschter Pflanzen in das von der Rasenfläche abgegrenzte Gebiet verhindert.

Es ist vorteilhaft, wenn sich eine Stabilisierungsleiste parallel zur Rasensperre in einem Abstand von etwa 5 cm erstreckt und etwa 8 cm tief in den Untergrund ragen kann. Dies kann einerseits zur Erhöhung der Stabilität gegen Verwindung der Kunstrasensperre dienen. Andererseits wird dadurch auch die unterirdische Barrierewirkung verbessert.

In einer vorteilhaften Variante kann sich eine Naturunterseite auf dem Anschlussgitter befinden, die mit dem Naturrasen zusammen verwachsen soll. Dies kann die Stabilität erhöhen.

Bei einer geraden Rasensperre kann es von Vorteil sein, wenn das Anschlussgitter eine Breite von etwa 4 bis 5 cm hat und sich über die gesamte Länge der Kunstrasensperre erstreckt. So wird eine ausreichend große Fläche zum Verwachsen mit dem Naturrasen zur Verfügung gestellt.

In einer Variante der Erfindung kann der Kunstrasen beispielsweise mit einer Breite von etwa 7 cm auf der gesamten Länge des Bauteils durch Hinterspritzen aufgebracht werden. Auch gerade Kunstrasensperren können auf diese Weise einfach und schnell hergestellt werden bei gleichzeitiger Gewährleistung einer robusten und langlebigen Verbindung.

Es ist vorteilhaft, wenn die Kunstrasensperre aus Thermoplast oder anderen geeigneten Kunststoffen oder Polymeren hergestellt ist. Dies bietet Vorteile aufgrund des Einsatzes im Freien und in feuchten Böden, da diese Materialien ohne kostspielige Nachbearbeitung solchen Bedingungen standhalten und beispielsweise nicht rosten.

Die Erfindung bezieht sich auch auf ein Verfahren zur Herstellung einer Kunstrasensperre mit einer Rasensperre und einem Anschlussgitter, wobei die Rasensperre und das Anschlussgitter durch Spritzguss geformt werden. Das erfindungsgemäße Verfahren zeichnet sich dadurch aus, dass ein zugeschnittener Kunstrasenabschnitt in ein Spritzgusswerkzeug eingelegt wird und die Rasensperre und das Anschlussgitter während des Spritzgießens unlöslich mit dem Kunstrasenabschnitt verbunden werden. Wie bereits erwähnt, gewährleistet ein solches Verfahren eine einfache und schnelle Herstellung der erfindungsgemäßen Kunstrasensperre bei gleichzeitiger Gewährleistung einer robusten und langlebigen Verbindung zwischen Kunstrasen und der Trägerstruktur.

Es ist vorteilhaft, wenn der Kunstrasenabschnitt als Kreisring zugeschnitten ist. Ein auf diese Weise angepasster Kunstrasenabschnitt fügt sich besonders gut in runde Kunstrasensperren mit einer Aussparung beispielsweise für eine Bewässerungsdüse ein.

Im Folgenden ist mitunter auch von Trägern oder Kunstrasenträgern die Rede. Hiermit ist im Wesentlichen die Kunstrasensperre beziehungsweise deren Komponenten, die nicht zum Kunstrasen gehören, gemeint. Darüber hinaus werden in der gesamten Anmeldung die Ausdrücke "Anschlussfläche" und "Klebefläche" synonym verwendet.

Die Erfindung bezieht sich auf eine Kunstrasensperre sowie ein Verfahren zu deren Herstellung der vorstehend beschriebenen Art.

Im Folgenden werden zwei vorteilhafte Ausführungsbeispiele der Erfindung anhand von Zeichnungen näher erläutert.
- Figur 1: zeigt eine Draufsicht von oben einer erfindungsgemäßen runden Kunstrasensperre gemäß einem ersten Ausführungsbeispiel.
- Figur 2: zeigt die Kunstrasensperre aus Figur 1 in einer entlang der mit B-B bezeichneten Schnittlinie geschnittenen Ansicht.
- Figur 3: zeigt eine Draufsicht von oben einer erfindungsgemäßen geraden Kunstrasensperre gemäß einem zweiten Ausführungsbeispiel.
- Figur 4: zeigt die Kunstrasensperre aus Figur 3 in einer entlang der mit C-C bezeichneten Schnittlinie geschnittenen Ansicht.
- Figur 5: zeigt die Kunstrasensperre aus Figur 3 in einer entlang der mit E-E bezeichneten Schnittlinie geschnittenen Ansicht.

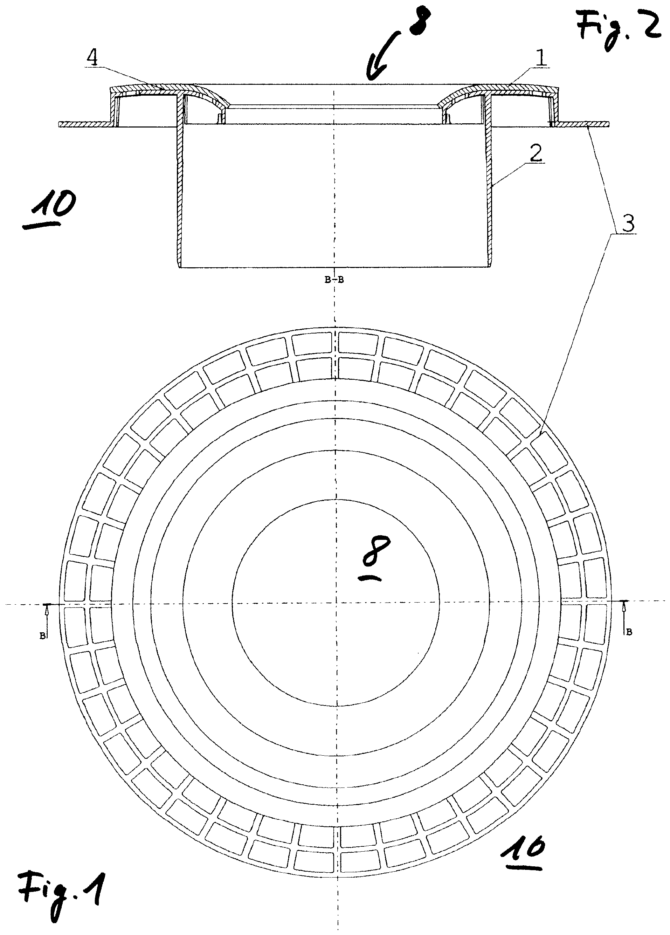

Figur 1 zeigt ein erstes Ausführungsbeispiel einer erfindungsgemäßen Kunstrasensperre 10 in Draufsicht. Wie zum Teil in Figur 2 besser zu erkennen ist, weist die Kunstrasensperre 10 Kunstrasen 1, eine Rasensperre 2, ein Anschlussgitter 3 und eine Anschlussfläche 4 für den Kunstrasen auf.

Die Kunstrasensperre 10 besteht aus einer runden Wachstumssperre 2, die ca. 8 cm tief in das Erdreich ragt, die auch zur Stabilisierung dient. In der Mitte ist eine runde Aussparung 8 (im Ausführungsbeispiel mit einem Durchmesser von ca. 12 bis 13 cm), damit eine nicht gezeigte Düse einer Bewässerungsanlage ungehindert Wasser verteilen kann. Wie bereits erwähnt, kann die Kunstrasensperre jedoch auch permanent oder temporär, beispielsweise durch Deckel oder Klappen, verschlossen sein. Der Kunstrasen 1 fällt zur Mitte hin ca. 15 mm geschwungen nach unten. Die Klebefläche 4 hat einen Durchmesser von ca. 25 bis 30 cm, das horizontale Anschlussgitter 3 ist 2 bis 3 cm unterhalb der Kunstrasenklebefläche 4 angebracht, damit sich der Naturrasen mit dem Kunstrasen 1 auf gleicher Höhe verwachsen kann. Es ragt 4 bis 5 cm heraus. Zwischen der Innenaussparung 8 und dem Anschlussgitter 3 befindet sich der Kunstrasen 1, der durch Hinterspritzen mit den übrigen Komponenten verbunden wird. Für die Kunstrasensperre 10 ist ein Thermoplast-Kunststoff vorgesehen. Alle Maße sind bevorzugt, können aber je nach Bedarf geändert werden. Die Kunstrasenfläche ist vorzugsweise rund, kann aber auch - je nach Bedarf - oval, sternförmig oder rechteckig angefertigt werden.

Die Rasensperre 2 schützt einen bestimmten Bereich vor Gräserbewuchs. Sie hindert die Wurzeln des Anschlussrasens, in den geschützten Bereich vorzudringen. Diese Rasensperre steckt ca. 8 cm tief im Erdreich, umschließt den Spritzwasserkörper und verhindert, dass die Wurzeln unter der Sperre hindurch wachsen können. Die Wand ist konisch und am Ende zugespitzt, damit das Eindrücken oder Versenken in die Erde erleichtert wird. Sie dient auch als Stabilisierung des Trägers.

Das Anschlussgitter 3 ragt ca. 4 bis 5 cm über die Anschlussfläche 4 hinaus. Es befindet sich ca. 2 bis 3 cm unterhalb der Kunstrasenverbindungsfläche 4, damit der Naturrasen mit dem Kunstrasen 1 auf gleicher Höhe verwachsen kann, um bei der Rasenpflege problemlos übermäht werden zu können. Das Anschlussgitter 4 dient zur Stabilisierung der Konstruktion. Dies wird erreicht, sobald sich der Naturrasen mit dem Anschlussgitter 4 verwachsen hat.

Die Kunstrasensperre 10 wird durch Spritzgießen hergestellt. Der als Kreisring zugeschnittene Kunstrasen 1 wird in ein Spritzgusswerkzeug mit eingelegt. Der Rasenträger mit Rasensperre 2 und Anschlussgitter 3 wird gespritzt und mit dem Kunstrasen 1 unlöslich verbunden.

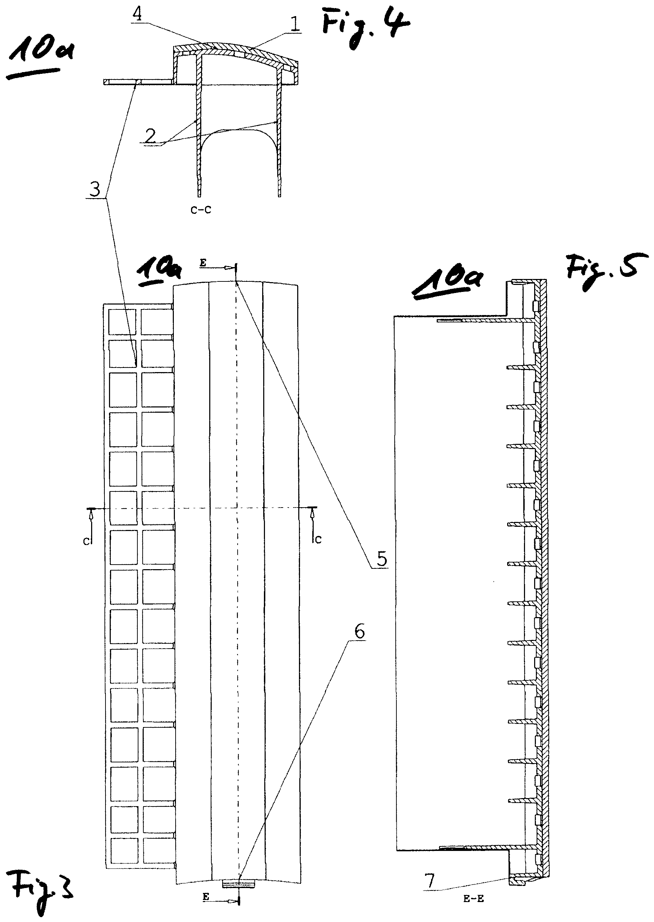

Ein in den Figuren 3 bis 5 dargestelltes Ausführungsbeispiel weist ähnliche Komponenten auf, die ähnliche Funktionen erfüllen. Im Unterschied zum ersten Ausführungsbeispiel handelt es sich jedoch hier bei der Kunstrasensperre 10 um eine gerade Rasenkante 10a. Es kann sich jedoch auch um eine angewinkelte oder kreisbogenförmig geschwungene Rasenkante handeln. Auch Eckstücke sind denkbar. Die Rasenkante 10a schützt Wege, Beete und Flächen, die an Rasen angrenzen, vor Bewuchs. Sie hat eine bevorzugte Gesamtlänge von 34 cm und ist an einem Ende mit einem konkaven Radius 6 und am anderen Ende mit einem konvexen Radius 5 ausgeführt. An einem Ende ist ein Haken 7 angebracht, damit sich einzelne Elemente, d. h. Rasenkanten 10a, fugenlos miteinander verbinden lassen. Die Rasenkante 10a umfasst eine gerade Wachstumssperre 2, die ca. 8 cm in das Erdreich ragt und sich über das gesamte Bauteil zieht, und eine Stabilisierungsleiste 2, die parallel zur Wachstumssperre in einem Abstand von ca. 5 cm verläuft und ca. 8 cm tief in den Untergrund ragt. Auf der Naturrasenseite befindet sich ein Anschlussgitter 3, das mit dem Naturrasen verwächst. Das Gitter 3 hat eine Breite von ca. 4 bis 5 cm und zieht sich über die gesamte Länge. Der Kunstrasen 1 wird mit einer Breite von ca. 7 cm auf der gesamten Länge des Bauteils durch Hinterspritzen aufgebracht. Für die Kunstrasenkante 10a ist ein Thermoplast-Kunststoff vorgesehen. Es kann jede Art von Kunstrasen 1 aufgebracht werden. Alle Maße sind bevorzugt, können aber je nach Bedarf geändert werden.

Die Rasensperre 10a schützt einen bestimmten Bereich vor Gräserbewuchs. Die Kunststoffwand 2 hindert die Wurzeln des Anschlussrasens, in den geschützten Bereich vorzudringen. Diese Wand steckt ca. 8 cm tief im Erdreich und verhindert, dass die Wurzeln unter der Sperre 10a hindurch wachsen können. Die Wand 2 ist konisch und am Ende zugespitzt, damit das Eindrücken oder Versenken in die Erde erleichtert wird. Sie dient auch als Stabilisierung des Trägers.

## Patentansprüche

1. Kunstrasensperre (10), umfassend: eine Rasensperre (2), Kunstrasen (1) und eine Anschlussfläche (4) für den Kunstrasen (1), **gekennzeichnet durch** ein Anschlussgitter (3) und **dadurch**, dass der Kunstrasen (1) mittels Hinterspritzen mit der Anschlussfläche (4) verbunden ist.

2. Kunstrasensperre gemäß Anspruch 1, **dadurch gekennzeichnet, dass** sie eine runde Rasensperre (2) enthält, die vorzugsweise etwa 8 cm tief in das Erdreich ragt und somit auch zur Stabilisierung dient.

3. Kunstrasensperre gemäß Anspruch 2, **dadurch gekennzeichnet, dass** sie in der Mitte der Rasensperre (2) eine runde oder zirkuläre Aussparung (8) aufweist, damit eine Düse einer Bewässerungsanlage ungehindert Wasser verteilen kann.

4. Kunstrasensperre gemäß Anspruch 3, **dadurch gekennzeichnet, dass** zwischen einer Kante des Anschlussgitters (3) und der Aussparung (8) die Anschlussfläche (4) vorgesehen ist.

5. Kunstrasensperre gemäß einem der vorangehenden Ansprüche, **dadurch gekennzeichnet, dass** das Anschlussgitter (3) 2 bis 3 cm unterhalb der Anschlussfläche (4) angebracht ist.

6. Kunstrasensperre gemäß einem der vorangehenden Ansprüche, **dadurch gekennzeichnet, dass** das Anschlussgitter (3) etwa 4 bis 5 cm von dem Kunstrasen (1) herausragt.

7. Kunstrasensperre nach Anspruch 1, **dadurch gekennzeichnet, dass** sie eine gerade Rasensperre (2) enthält, die vorzugsweise etwa 8 cm tief in das Erdreich ragt.

8. Kunstrasensperre gemäß Anspruch 1 oder 7, **dadurch gekennzeichnet, dass** die Kunstrasensperre (10, 10a) an einem Ende mit einem konkaven Radius (6) und am anderen Ende mit einem konvexen Radius (5) versehen ist.

9. Kunstrasensperre gemäß Anspruch 7 oder 8, **dadurch gekennzeichnet, dass** an einem Ende ein Haken (7) angebracht ist, damit sich benachbarte Kunstrasensperren (10, 10a) fugenlos miteinander verbinden lassen.

10. Kunstrasensperre gemäß einem der Ansprüche 7-9, **dadurch gekennzeichnet, dass** sich eine Stabilisierungsleiste (2) parallel zur Rasensperre (2) in einem Abstand von etwa 5 cm erstreckt und etwa 8 cm tief in den Untergrund ragen kann.

11. Kunstrasensperre gemäß einem der vorangehenden Ansprüche, **dadurch gekennzeichnet, dass** sich eine Naturunterseite auf dem Anschlussgitter befindet, die mit dem Naturrasen zusammenverwachsen soll.

12. Kunstrasensperre gemäß einem der Ansprüche 7-11, **dadurch gekennzeichnet, dass** der Kunstrasen (1) mit einer Breite von etwa 7 cm auf der gesamten Länge der Kunstrasensperre (10) durch Hinterspritzen aufgebracht ist.

13. Verfahren zur Herstellung einer Kunstrasensperre mit einer Rasensperre (2) und einem Anschlussgitter (3), wobei die Rasensperre (2) und das Anschlussgitter (3) durch Spritzguss geformt werden, **dadurch gekennzeichnet, dass** ein zugeschnittener Kunstrasenabschnitt (1) in ein Spritzgusswerkzeug eingelegt und die Rasensperre (2) und das Anschlussgitter (3) während des Spritzgießens unlöslich mit dem Kunstrasenabschnitt (1) verbunden werden.

14. Verfahren nach Anspruch 13, **dadurch gekennzeichnet, dass** der Kunstrasenabschnitt (1) als Kreisring zugeschnitten ist.

## Claims

1. An artificial turf barrier (10), comprising: a lawn barrier (2), artificial turf (1), and a connecting area (4) for said artificial turf (1), **characterized by** a connecting grid (3) and in that the artificial turf (1) is connected to the connecting area (4) by back injection molding.

2. The artificial turf barrier according to claim 1, **characterized in that** it includes a round lawn barrier (2) preferably projecting about 8 cm deep into the soil and thus serving to provide stability.

3. The artificial turf barrier according to claim 2, **characterized in that** a round or circular cut-out (8) is provided in the center of the lawn barrier (2) to enable a nozzle of an irrigation system to distribute water without hindrance.

4. The artificial turf barrier according to claim 3, **characterized in that** the connecting area (4) is provided between an edge of the connecting grid (3) and the cut-out (8).

5. The artificial turf barrier according to any of the preceding claims, **characterized in that** the connecting grid (3) is applied 2 to 3 cm below the connecting area (4).

6. The artificial turf barrier according to any of the preceding claims, **characterized in that** the connecting grid (3) projects about 4 to 5 cm from the artificial turf (1).

7. The artificial turf barrier according to claim 1, **characterized in that** it includes a straight lawn barrier (2) preferably projecting about 8 cm deep into the soil.

8. The artificial turf barrier according to claim 1 or 7, **characterized in that** a concave radius (6) is provided on one end of the artificial turf barrier (10, 10a) and a convex radius (5) is provided on the other end.

9. The artificial turf barrier according to claim 7 or 8, **characterized in that** a hook (7) is provided on one end thereof for connecting adjacent artificial turf barriers (10, 10a) with each other seamlessly.

10. The artificial turf barrier according to any of claims 7-9, **characterized in that** a stabilizing bar (2) extends parallel to the lawn barrier (2) at a distance of about 5 cm and can project about 8 cm deep into the ground.

11. The artificial turf barrier according to any of the preceding claims, **characterized in that** the connecting grid is provided with a natural bottom side intended to grow together with the natural lawn.

12. The artificial turf barrier according to any of claims 7-11, **characterized in that** the artificial turf (1) is applied to the entire length of the artificial turf barrier (10) at a width of about 7 cm by back injection molding.

13. A method for manufacturing an artificial turf barrier including a lawn barrier (2) and a connecting grid (3), the lawn barrier (2) and the connecting grid (3) being formed by injection molding, **characterized in that** an artificial turf portion (1) cut to size is inserted into an injection mold and the lawn barrier (2) and the connecting grid (3) are non-detachably combined with the artificial turf portion (1) during injection molding.

14. The method according to claim 14, **characterized in that** the artificial turf portion (1) is cut to the form of a circular annulus.

## Revendications

1. Barrière de délimitation artificielle de gazon (10) comprenant : une barrière de délimitation de gazon (2), du gazon artificiel (1) et une surface d'attache (4) pour le gazon artificiel (1), **caractérisée par** une grille de raccord (3), et en ce que le gazon artificiel (1) est lié à la surface d'attache (4) par le fait que celle-ci est moulée par injection sous le gazon artificiel.

2. Barrière de délimitation artificielle de gazon selon la revendication 1, **caractérisée en ce qu'**elle comporte une barrière de délimitation de gazon (2) ronde, qui s'enfonce de préférence d'environ 8 cm de profondeur dans le sol et sert ainsi également à la stabilisation.

3. Barrière de délimitation artificielle de gazon selon la revendication 2, **caractérisée en ce qu'**elle présente au centre de la barrière de délimitation de gazon (2), un évidement (8) rond ou circulaire, de manière à ce qu'une buse d'une installation d'arrosage puisse distribuer de l'eau sans entraves.

4. Barrière de délimitation artificielle de gazon selon la revendication 3, **caractérisée en ce qu'**entre un bord de la grille de raccord (3) et l'évidement (8) est prévue la surface d'attache (4).

5. Barrière de délimitation artificielle de gazon selon l'une des revendications précédentes, **caractérisée en ce que** la grille de raccord (3) est située 2 à 3 cm en-dessous de la surface d'attache (4).

6. Barrière de délimitation artificielle de gazon selon l'une des revendications précédentes, **caractérisée en ce que** la grille de raccord (3) fait saillie d'environ 4 à 5 cm du gazon artificiel (1).

7. Barrière de délimitation artificielle de gazon selon la revendication 1, **caractérisée en ce qu'**elle comporte une barrière de délimitation de gazon (2) rectiligne, qui s'enfonce de préférence d'environ 8 cm de profondeur dans le sol.

8. Barrière de délimitation artificielle de gazon selon la revendication 1 ou la revendication 7, **caractérisée en ce que** la barrière de délimitation artificielle de gazon (10, 10a) est pourvue, à une extrémité, d'un rayon concave (6), et à l'autre extrémité, d'un rayon convexe (5).

9. Barrière de délimitation artificielle de gazon selon la revendication 7 ou la revendication 8, **caractérisée en ce qu'**à une extrémité est placé un crochet (7) de manière à pouvoir relier mutuellement, sans joint, les barrières de délimitation artificielles de gazon (10, 10a) voisines.

10. Barrière de délimitation artificielle de gazon selon l'une des revendications 7-9, **caractérisée en ce qu'**une nervure de stabilisation (2) s'étend parallèlement à la barrière de délimitation de gazon (2) à une distance d'environ 5 cm de celle-ci, et peut s'enfoncer d'environ 8 cm de profondeur dans le sol.

11. Barrière de délimitation artificielle de gazon selon l'une des revendications précédentes, **caractérisée en ce que** sur la grille de raccord se trouve une sous-face nature, qui favorise la pousse imbriquée du gazon naturel.

12. Barrière de délimitation artificielle de gazon selon l'une des revendications 7-11, **caractérisée en ce que** le gazon artificiel (1) est appliqué selon une largeur d'environ 7 cm sur la totalité de la longueur de la barrière de délimitation artificielle de gazon (10), par moulage par injection de celle-ci sous le gazon artificiel.

13. Procédé de fabrication d'une barrière de délimitation artificielle de gazon comprenant une barrière de délimitation de gazon (2) et une grille de raccord (3), la barrière de délimitation de gazon (2) et la grille de raccord (3) étant réalisées par moulage par injection, **caractérisé en ce qu'**un flan découpé de gazon artificiel (1) est placé dans un moule de moulage par injection, et la barrière de délimitation de gazon (2) et la grille de raccord (3) sont liées de manière inamovible au flan découpé de gazon artificiel (1) pendant le moulage par injection.

14. Procédé selon la revendication 13, **caractérisé en ce que** le flan découpé de gazon artificiel (1) est découpé sous forme d'anneau circulaire.
